# FASCICULE DE BREVET EUROPEEN

(11) **EP 3 544 939 B1**
(45) Date de publication et mention de la délivrance du brevet: **14.10.2020**
(21) Numéro de dépôt: 17812018.4
(22) Date de dépôt: 22.11.2017
(51) Int. Cl.: C04B 35/628, C04B 35/80

(54) **PIECE EN MATERIAU COMPOSITE COMPRENANT UNE COUCHE D'INTERPHASE EN NITRURE DE BORE DOPE PAR DE L'ALUMINIUM**
VERBUNDWERKSTOFF ENTHALTEND EINE ZWISCHENSCHICHT ENTHALTEND ALUMINIUM DOTIERTES BORONNITRID
COMPOSITE MEMBER COMPRISING AN INTERLAYER COMPRISING ALUMINUM DOPED BORON NITRIDE

(30) Priorité: 28.11.2016 FR 1661557
(43) Date de publication de la demande: 02.10.2019
(73) Titulaire: Safran Ceramics, 33185 Le Haillan (FR); Centre National de la Recherche Scientifique, 75016 Paris (FR)
(72) Inventeur: BUET, Emilien, 77550 Moissy-Cramayel (FR); CARMINATI, Paul, 33700 Merignac (FR); JACQUES, Sylvain, Lucien, 33400 Talence (FR); REBILLAT, Francis, 33600 Pessac (FR)
(74) Mandataire: Cabinet Beau de Loménie
(86) Numéro de dépôt international: PCT/FR2017/053209
(87) Numéro de publication internationale: WO 2018/096266

(56) Documents cités:
- EP-A2- 2 574 604
- WO-A1-2005/092610
- HURWITZ F I ET AL: "ALTERNATIVE INTERPHASE COATINGS FOR IMPROVED DURABILITY IN SIC/SIC COMPOSITES", CERAMIC ENGINEERING AND SCIENCE PROCEED, AMERICAN CERAMIC SOCIETY INC, US, vol. 24, no. 4, 26 janvier 2003 (2003-01-26), pages 231-237, XP008049905, ISSN: 0196-6219

## Description

### Arrière-plan de l'invention

L'invention concerne une pièce en matériau composite à matrice majoritairement en céramique (pièce en CMC) comprenant une couche d'interphase de nitrure de bore dopé par de l'aluminium intercalée entre le renfort fibreux et une phase de matrice majoritairement en céramique.

Un domaine d'application de l'invention est la fabrication de matériaux composites utiles pour la fabrication de pièces structurales utilisées dans des parties chaudes de turbomachines, notamment de turbomoteurs aéronautiques, par exemple des pièces de turbines d'arrière-corps ou de tuyères secondaires.

WO2005/092610 A1 décrit la fabrication de matériaux composites pour la fabrication des pièces structurales utilisées à haute température dans des atmosphères oxydantes, notamment en aéronautique. Ce document divulgue un matériau composite comprenant des fibres et une matrice en céramique, les fibres étant couvertes d'un revêtement de nitrure de bore comprenant de l'aluminium.

On connaît des pièces en CMC qui comprennent un renfort fibreux en fils de carbure de silicium (SiC), un revêtement d'interphase de nitrure de bore (BN) présent sur les fils et une matrice majoritairement en céramique.

La fabrication de telles pièces en matériau CMC peut comprendre une première étape durant laquelle une préforme fibreuse ayant une forme voisine de celle de la pièce à fabriquer est obtenue par tissage tridimensionnel de fils SiC.

Durant une deuxième étape, le revêtement d'interphase BN peut être formé sur les fils SiC par CVI. Durant cette étape, la préforme est maintenue dans une forme voulue au moyen d'un outillage ou conformateur. L'interphase BN peut être formée par CVI sur les fils SiC à partir d'une phase gazeuse réactionnelle comprenant du trichlorure de bore BCl₃, de l'ammoniac NH₃ et du dihydrogène H₂. Le processus CVI peut, par exemple, être réalisé à une température relativement basse par exemple de l'ordre de 700 °C et sous une pression relativement faible par exemple d'environ 1,3 kPa, notamment afin d'obtenir une interphase BN procurant une liaison relativement forte entre les fils et l'interphase. Une telle liaison forte permet de tirer profit des capacités de déformation élastique des fils SiC pour obtenir un matériau CMC ayant une limite élevée de déformation élastique, donc une moindre susceptibilité à la fissuration sous charge. L'interphase de BN joue un rôle de fusible mécanique en permettant de dévier les fissures se propageant en direction des fibres et améliore ainsi la durée de vie du matériau.

Dans une troisième étape, la matrice majoritairement en céramique est formée dans la porosité résiduelle de la préforme fibreuse comprenant les fils revêtus par l'interphase BN afin d'obtenir la pièce en matériau CMC.

Les matériaux CMC sont inévitablement sujets à des fissurations qui, si elles n'affectent pas de façon sensible les propriétés mécaniques des matériaux, peuvent offrir à l'atmosphère environnante l'accès au cœur du matériau. Les fissurations ou micro-fissurations peuvent exister dès le stade de réalisation du matériau ou apparaître lorsque celui-ci est en service. Or, de tels matériaux sont plus particulièrement destinés à des applications à température élevée en atmosphère oxydante (sous air), notamment dans les domaines aéronautique et spatial.

Afin de garantir une bonne durée de vie, il est donc souhaitable de former une barrière empêchant l'atmosphère environnante d'avoir un effet corrosif vis-à-vis du renfort fibreux ou de l'interphase, faute de quoi les propriétés mécaniques du matériau seraient dégradées. Le nitrure de bore s'oxyde pour former un oxyde liquide B₂O₃ qui fait office de barrière de diffusion vis-à-vis de l'oxygène. Cependant, en présence d'humidité, l'oxyde liquide B₂O₃ se volatilise à haute température sous forme d'hydroxydes volatils HₓB_{y}O_{z}. Cette volatilisation conduit à une consommation par oxydation et corrosion de la couche de nitrure de bore. Cela peut conduire à une diminution des propriétés mécaniques du matériau.

L'invention vise à proposer une solution pour améliorer la tenue à l'oxydation et à la corrosion à haute température de pièces en CMC.

### Objet et résumé de l'invention

A cet effet, l'invention propose, selon un premier aspect, une pièce en matériau composite comprenant un renfort fibreux en fils de carbone ou de céramique et une matrice majoritairement en céramique, la pièce comprenant en outre une première couche d'interphase recouvrant les fils et présente entre les fils et la matrice, ladite première couche d'interphase étant une couche de nitrure de bore dopé par de l'aluminium et présentant une teneur atomique en aluminium comprise entre 5% et 15%.

Dans la suite, on désignera par « couche d'interphase B(AI)N » ou « première couche d'interphase » la première couche d'interphase de nitrure de bore dopé par de l'aluminium évoquée ci-dessus.

En comparaison avec une couche d'interphase de BN pur, la couche d'interphase B(Al)N présente une stabilité améliorée sous atmosphère humide à haute température et une moins grande sensibilité aux phénomènes d'oxydation et de corrosion. Plus précisément, la présence de l'aluminium dans la couche d'interphase B(Al)N à raison d'au moins 5% en pourcentages atomiques conduit à une amélioration de la résistance à l'oxydation de cette couche ainsi qu'à la rétention physico-chimique de l'oxyde liquide B₂O₃ par formation de cristaux de composés définis aB₂O₃.bAl₂O₃ (a et b étant des nombres entiers) sous atmosphère humide à haute température. En outre, le fait de limiter la teneur atomique en aluminium à au plus 15% dans la couche d'interphase B(AI)N permet à cette couche de disposer de propriétés satisfaisantes de déviation des fissures. Si la teneur atomique en aluminium dans une couche à base de nitrure de bore est supérieure à 15%, cette couche n'assure plus sa fonction de déviation des fissures et la durée de vie du matériau l'incorporant est dégradée. L'invention fournit ainsi des pièces en CMC présentant une durée de vie améliorée à haute température en milieu oxydant et humide.

Dans un exemple de réalisation, la première couche d'interphase peut être au contact des fils.

En variante, la pièce comprend en outre une deuxième couche d'interphase en nitrure de bore située entre les fils et la première couche d'interphase. En particulier, la première couche d'interphase peut, dans ce cas, être au contact de la deuxième couche d'interphase.

Dans un exemple de réalisation, la pièce peut comporter une couche comprenant du silicium en contact avec la première couche d'interphase.

La présence d'une couche comprenant du silicium au contact de la couche d'interphase B(Al)N permet avantageusement de stabiliser davantage encore le verre B₂O₃ par apport du silicium en formant un verre borosilicaté et ainsi d'améliorer davantage encore la résistance de la pièce à l'oxydation et à la corrosion à haute température.

En particulier, ladite couche comprenant du silicium peut être présente entre les fils et la première couche d'interphase. En variante ou en combinaison, la matrice peut présenter une portion comportant du silicium en contact avec la première couche d'interphase.

Dans un exemple de réalisation, la première couche d'interphase présente une teneur atomique en aluminium comprise entre 5% et 12%. En particulier, la première couche d'interphase peut présenter une teneur atomique en aluminium comprise entre 7% et 12%.

La présente invention vise également un procédé de fabrication d'une pièce telle que décrite plus haut, le procédé comprenant au moins les étapes suivantes :
- formation de la première couche d'interphase sur les fils,
- réalisation d'une préforme fibreuse formant le renfort fibreux de la pièce à obtenir à partir des fils par mise en œuvre d'une ou plusieurs opérations textiles, et
- formation d'une matrice majoritairement en céramique dans la porosité de la préforme fibreuse sur la première couche d'interphase.

Dans un exemple de réalisation, la première couche d'interphase est formée sur les fils par infiltration ou dépôt chimique en phase vapeur. En particulier, la première couche d'interphase peut être formée à partir d'une phase gazeuse réactionnelle comprenant du trichlorure de bore BCl₃, de l'ammoniac NH₃ et un gaz précurseur comprenant de l'aluminium. Le gaz précurseur comprenant de l'aluminium peut, par exemple, être choisi parmi : le triméthylaluminium, le trichlorure d'aluminium, l'aluminium acétylacétonate, l'isopropoxyde d'aluminium, l'éthoxyde d'aluminium et leurs mélanges.

La présente invention vise également un procédé d'utilisation d'une pièce telle que décrite plus haut, le procédé comprenant une étape d'utilisation de ladite pièce à une température supérieure ou égale à 800°C en milieu oxydant et humide.

### Brève description des dessins

D'autres caractéristiques et avantages de l'invention ressortiront de la description suivante, donnée à titre non limitatif, en référence aux dessins annexés, sur lesquels :
- la figure 1 représente, de manière schématique et partielle, une section d'un premier exemple de pièce selon l'invention,
- la figure 2 représente, de manière schématique et partielle, une section d'un deuxième exemple de pièce selon l'invention,
- les figures 3 et 4 sont des ordinogrammes montrant des successions d'étapes permettant de fabriquer les pièces illustrées aux figures 1 et 2,
- la figure 5 représente, de manière schématique et partielle, une section d'un troisième exemple de pièce selon l'invention,
- la figure 6 est un ordinogramme montrant une succession d'étapes permettant de fabriquer la pièce illustrée à la figure 5, et
- la figure 7 est un résultat d'essai de corrosion comparant la résistance à la corrosion d'une interphase de BN pur avec celle d'une interphase B(Al)N.

### Description détaillée de modes de réalisation

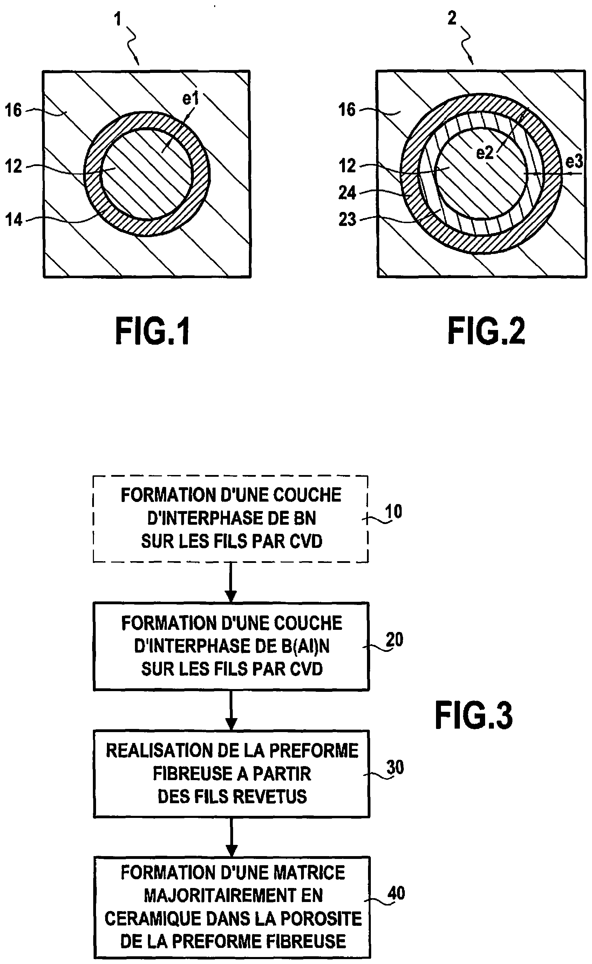

On a représenté à la figure 1 un premier exemple d'une pièce 1 selon l'invention.

La pièce 1 comprend un renfort fibreux comprenant une pluralité de fils 12 de carbone ou de céramique. On peut par exemple utiliser des fils de carbure de silicium fournis par la société NGS sous la référence « Nicalon », « Hi-Nicalon » ou encore « Hi-Nicalon Type S ». Les fils de carbone utilisables sont, par exemple, fournis sous la dénomination Torayca T300 3K par la société Toray.

Dans l'exemple illustré, la pièce 1 comprend une couche d'interphase B(Al)N 14. La couche d'interphase B(Al)N 14 a ici, du fait de sa teneur limitée en aluminium, une fonction de défragilisation du matériau composite qui favorise la déviation de fissures éventuelles parvenant à l'interphase après s'être propagées dans la matrice, empêchant ou retardant la rupture des fils par de telles fissures. La couche d'interphase B(Al)N 14 présente, en outre, une stabilité améliorée sous atmosphère humide à haute température et une moins grande sensibilité aux phénomènes d'oxydation et de corrosion par rapport à une couche d'interphase en BN pur, conférant ainsi à la pièce 1 une meilleure durée de vie en fonctionnement. Comme évoqué plus haut, la présence de l'aluminium dans la couche d'interphase B(AI)N conduit à une amélioration de la résistance à l'oxydation de cette couche ainsi qu'à la rétention physico-chimique de l'oxyde liquide B₂O₃ par formation de cristaux de composés définis aB₂O₃.bAl₂O₃ sous atmosphère humide à haute température. En particulier, la présence de l'aluminium permet la formation de deux composés définis 2Al₂O₃.B₂O₃ et 9Al₂O₃.2B₂O₃. Le borate d'aluminium 2Al₂O₃.B₂O₃ présente une bonne tenue à la corrosion par l'humidité, bien supérieure à celle de B₂O₃, aux températures élevées, c'est-à-dire à partir de 400°C et jusqu'à sa décomposition à 1189°C. Cette décomposition se traduit par la formation du deuxième composé défini 9Al₂O₃.2B₂O₃ avec libération de B₂O₃ liquide qui contribue à la cicatrisation à plus haute température. La décomposition du borate d'aluminium 9Al₂O₃.2B₂O₃ intervient à plus de 1900°C.

Dans l'exemple illustré, la pièce 1 présente une interphase monocouche formée par la couche d'interphase B(AI)N 14. Dans la pièce 1, la couche d'interphase B(Al)N 14 est présente au contact des fils 12. L'épaisseur e₁ de la couche d'interphase B(Al)N 14 peut par exemple être comprise entre 10 nm et 2000 nm, par exemple entre 100 nm et 2000 nm, voire entre 100 nm et 1000 nm.

Comme évoqué plus haut, la couche d'interphase B(Al)N 14 est une couche de nitrure de bore dopé par de l'aluminium à raison de 5% à 15% en pourcentage atomique. En particulier, la teneur atomique en aluminium dans la couche d'interphase B(AI)N peut être comprise entre 5% et 14%, voire entre 5% et 13%, voire entre 5% et 12%, voire entre 5% et 11%, voire entre 5% et 10%, voire entre 5% et 9%. La teneur atomique en aluminium dans la couche d'interphase B(AI)N peut encore être comprise entre 6% et 15%, voire entre 6% et 14%, voire entre 6% et 13%, voire entre 6% et 12%, voire entre 6% et 11%, voire entre 6% et 10%, voire entre 6% et 9%. La teneur atomique en aluminium dans la couche d'interphase B(AI)N peut encore être comprise entre 7% et 15%, voire entre 7% et 14%, voire entre 7% et 13%, voire entre 7% et 12%, voire entre 7% et 11%, voire entre 7% et 10%, voire entre 7% et 9%. La teneur atomique en aluminium dans la couche d'interphase B(AI)N peut encore être comprise entre 8% et 15%, voire entre 8% et 14%, voire entre 8% et 13%, voire entre 8% et 12%, voire entre 8% et 11%, voire entre 8% et 10%, voire entre 8% et 9%. La couche d'interphase B(AI)N 14 peut être constituée, aux inévitables impuretés près, de bore, d'azote et d'aluminium avec une teneur atomique en aluminium telle que décrite plus haut. La couche d'interphase B(Al)N 14 peut, en particulier, être dépourvue de carbone ou de silicium. Les caractéristiques relatives à la composition de la couche d'interphase B(AI)N qui viennent d'être décrites peuvent s'appliquer à tous les exemples de réalisation de la pièce selon l'invention et pas seulement à l'exemple de réalisation illustré à la figure 1.

La pièce 1 présente, en outre, une matrice majoritairement en céramique 16, notamment en carbure, oxyde ou nitrure réfractaire. Par « matrice majoritairement en céramique », il faut comprendre que la teneur massique en matériau céramique dans la matrice est supérieure ou égale à 50%. La matrice 16 densifie le renfort fibreux en étant présente dans la porosité de ce dernier. La matrice 16 enrobe les fibres 12 et l'interphase 14. La matrice 16 peut occuper la majorité (i.e. au moins 50%), voire au moins 75%, du volume de la porosité accessible du renfort fibreux. Dans l'exemple illustré, la matrice 16 est présente au contact de la couche d'interphase B(Al)N 14.

La matrice 16 peut par exemple être en carbure de silicium. En variante, la matrice 16 peut comporter au moins une première couche de matériau céramique et au moins une deuxième couche d'un matériau déviateur de fissures, comme le carbone pyrolytique (PyC), le carbone dopé au bore (BC, avec du bore en une proportion atomique comprise entre 5% et 20%, le complément étant du carbone) ou le nitrure de bore. Selon une variante, la matrice 16 peut être une matrice séquencée comprenant des couches en céramique alternant avec des couches en matériau déviateur de fissures. Les couches en céramique peuvent être en SiC ou en un système ternaire Si-B-C ou encore en carbure de bore B₄C.

La figure 2 représente un deuxième exemple de réalisation d'une pièce 2 selon l'invention.

Dans cet exemple, la pièce 2 comprend un revêtement d'interphase multi-couches formé par la réunion de la première couche d'interphase 24 et d'une deuxième couche d'interphase 23. Dans l'exemple illustré, la pièce 2 comprend une deuxième couche d'interphase 23 en nitrure de bore. La deuxième couche d'interphase 23 est présente au contact des fils 12. L'épaisseur e₂ de la deuxième couche d'interphase 23 peut par exemple être comprise entre 10 nm et 2000 nm, par exemple entre 100 nm et 2000 nm, voire entre 100 nm et 1000 nm. La deuxième couche d'interphase 23 est revêtue par la première couche d'interphase B(AI)N 24. La couche d'interphase B(AI)N 24 est, dans l'exemple illustré, présente au contact de la couche d'interphase BN 23. L'épaisseur e₃ de la première couche d'interphase B(Al)N 24 peut par exemple être comprise entre 10 nm et 1000 nm, et par exemple entre 10 nm et 100 nm. L'épaisseur e₃ de la première couche d'interphase B(Al)N 24 peut être supérieure ou égale à l'épaisseur e₂ de la deuxième couche d'interphase 23. La matrice 16 majoritairement en céramique recouvre les couches 23 et 24. La matrice 16 peut être telle que décrite ci-dessus.

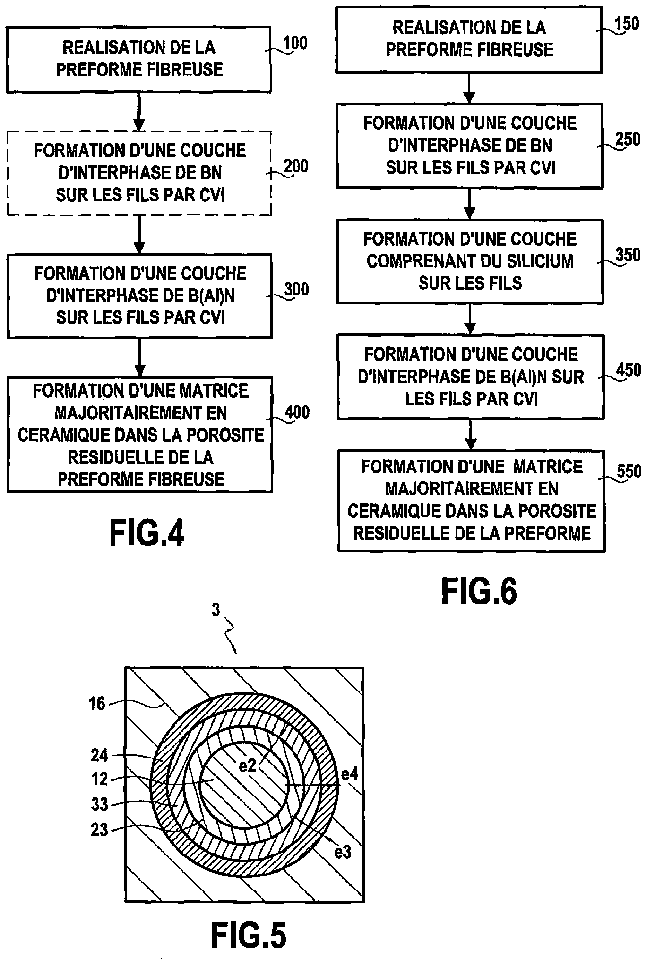

On pourrait en variante avoir au moins une troisième couche intercalée entre la deuxième couche d'interphase BN et la première couche d'interphase B(Al)N, comme il sera décrit plus bas. On va maintenant décrire, en lien avec les figures 3 et 4, deux méthodes de fabrication utilisables pour réaliser les pièces des figures 1 et 2.

En lien avec la figure 3, on peut dans un premier temps réaliser, de manière connue en soi, une première couche d'interphase en nitrure de bore par dépôt chimique en phase vapeur sur des fils céramiques ou en carbone (étape 10). Dans ce cas, on fait défiler, au travers d'une enceinte réactionnelle, une pluralité de fils non liés entre eux i.e. n'ayant pas subi d'opération textile pour former une structure fibreuse, en particulier ces fils ne sont pas tissés, tricotés ou tressés et l'on introduit une phase gazeuse dans l'enceinte réactionnelle. La phase gazeuse est introduite dans l'enceinte réactionnelle alors que les fils défilent en continu avec une vitesse non nulle au travers de cette enceinte afin former une interphase de nitrure de bore par CVD. Des systèmes permettant le dépôt d'une interphase par CVD en continu sur des fils en mouvement sont connus. On peut par exemple citer des systèmes similaires à celui décrit dans le brevet FR 8617157. La phase gazeuse utilisée pour le dépôt de nitrure de bore est connue en soi, on peut par exemple utiliser un système BCl₃/NH₃. L'étape 10 est toutefois une étape optionnelle qui aboutit, lorsqu'elle est réalisée, à la formation d'une pièce 2 ayant la structure illustrée à la figure 2 laquelle présente une première couche d'interphase 23 en nitrure de bore.

L'étape 20 consiste à déposer la couche d'interphase B(AI)N 14 ou 24 sur les fils 12, éventuellement revêtus de la première couche d'interphase BN 23. La couche d'interphase B(Al)N est, dans l'exemple de la figure 3, formée par CVD alors que les fils défilent en continu dans l'enceinte réactionnelle comme évoqué plus haut.

La couche d'interphase B(Al)N 14 ou 24 peut être formée par introduction, dans l'enceinte réactionnelle, d'une phase gazeuse comprenant du BCl₃, du NH₃ et un gaz précurseur comprenant de l'aluminium. Le gaz précurseur comprenant de l'aluminium est, par exemple, choisi parmi : le triméthylaluminium, le trichlorure d'aluminium, l'aluminium acétylacétonate, l'isopropoxyde d'aluminium, l'éthoxyde d'aluminium et leurs mélanges. Le gaz précurseur comprenant de l'aluminium peut être le triméthylaluminium ou le trichlorure d'aluminium. La phase gazeuse introduite peut en outre comporter un gaz diluant par exemple choisi parmi : l'argon, le diazote, le dihydrogène ou l'hélium.

La température dans l'enceinte réactionnelle lors de la formation de la couche d'interphase B(AI)N peut par exemple être supérieure ou égale à 800°C, voire à 1000°C. Cette température est par exemple comprise entre 800°C et 1400°C, voire entre 1000°C et 1400°C.

La pression dans l'enceinte réactionnelle lors de la formation de la couche d'interphase B(Al)N peut par exemple être comprise entre 0,1 kPa et 5 kPa.

La couche d'interphase B(Al)N peut être formée en imposant les conditions opératoires suivantes relatives aux débits d'introduction des gaz dans l'enceinte réactionnelle :
- rapport [débit d'introduction du BCl₃]/[débit d'introduction du gaz précurseur comprenant de l'aluminium] compris entre 2 et 5,
- rapport [débit d'introduction du NH₃]/[débit d'introduction du BCl₃] compris entre 1 et 15, et
- rapport [débit d'introduction du NH₃]/[débit d'introduction du gaz précurseur comprenant de l'aluminium] compris entre 1 et 50.

Lorsqu'un gaz diluant est utilisé, on peut mettre en œuvre une phase gazeuse présentant un rapport [débit de gaz diluant introduit dans l'enceinte réactionnelle]/[débit de BCl₃ + débit de NH₃ + débit du gaz précurseur comprenant de l'aluminium introduits dans l'enceinte réactionnelle] compris entre 1 et 10.

On peut, par exemple, former la couche d'interphase B(AI)N par mise en œuvre des conditions opératoires suivantes :
- température dans l'enceinte réactionnelle de 1200°C,
- pression dans l'enceinte réactionnelle de 0,2 kPa,
- triméthyl aluminium utilisé comme gaz précurseur comprenant de l'aluminium,
- rapport [débit d'introduction du BCl₃]/[débit d'introduction du gaz précurseur comprenant de l'aluminium] égal à 3,
- rapport [débit d'introduction du NH₃]/[débit d'introduction du BCl₃] égal à 10,
- rapport [débit d'introduction du NH₃]/[débit d'introduction du gaz précurseur comprenant de l'aluminium] égal à 30, et
- temps de séjour de la phase gazeuse dans l'enceinte réactionnelle inférieur à 10 ms, par exemple d'environ 8 ms.

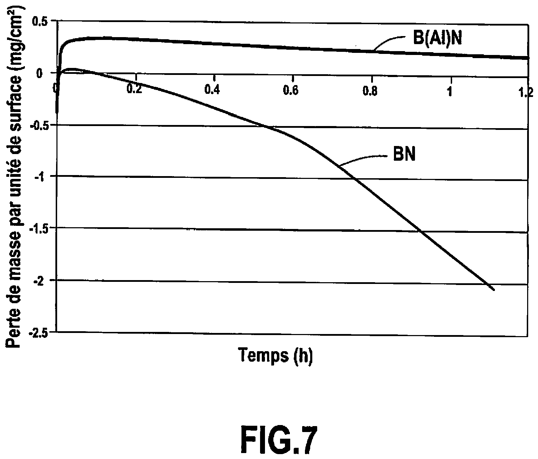

La mise en œuvre des conditions opératoires qui viennent d'être décrites a permis de réaliser une couche d'interphase de nitrure de bore dopé par de l'aluminium avec une teneur atomique en aluminium de 9%. La figure 7 est un résultat d'essai de corrosion montrant que la couche d'interphase de nitrure de bore non dopé par de l'aluminium est consommée beaucoup plus rapidement que la couche d'interphase B(Al)N. Les inventeurs ont mesuré une vitesse de consommation de la couche BN d'environ 6 µm/heure et une vitesse de consommation de la couche B(Al)N beaucoup plus faible de l'ordre de 1 µm/heure. La couche B(Al)N présente donc une résistance à l'oxydation et à la corrosion améliorée.

On réalise ensuite, dans le cadre de l'exemple de la figure 3, une préforme fibreuse à partir des fils revêtus par la couche d'interphase B(Al)N (étape 30). La préforme fibreuse est obtenue à partir d'au moins une opération textile mettant en œuvre les fils revêtus de la couche d'interphase B(Al)N. La préforme fibreuse est destinée à constituer le renfort fibreux de la pièce à obtenir. La préforme fibreuse peut, en particulier, être obtenue par tissage multicouches ou tridimensionnel des fils revêtus.

Par « tissage tridimensionnel » ou « tissage 3D », il faut comprendre un mode de tissage par lequel certains au moins des fils de chaine lient des fils de trame sur plusieurs couches de trame. Une inversion des rôles entre chaine et trame est possible dans le présent texte et doit être considérée comme couverte aussi par les revendications.

La préforme fibreuse peut, par exemple, présenter une armure multi-satin, c'est-à-dire être un tissu obtenu par tissage tridimensionnel avec plusieurs couches de fils de trame dont l'armure de base de chaque couche est équivalente à une armure de type satin classique mais avec certains points de l'armure qui lient les couches de fils de trame entre elles. En variante, la préforme fibreuse peut présenter une armure interlock. Par « armure ou tissu interlock », il faut comprendre une armure de tissage 3D dont chaque couche de fils de chaîne lie plusieurs couches de fils de trame avec tous les fils de la même colonne de chaîne ayant le même mouvement dans le plan de l'armure. Différents modes de tissage multicouches utilisables pour former la préforme fibreuse sont décrits dans le document WO 2006/136755.

Il est aussi possible de former d'abord des textures fibreuses telles que des tissus bidimensionnels ou des nappes unidirectionnelles, et d'obtenir la préforme fibreuse par drapage de telles textures fibreuses sur une forme. Ces textures peuvent éventuellement être liées entre elles par exemple par couture ou implantation de fils pour former la préforme fibreuse.

Une fois obtenue, la préforme fibreuse peut ensuite être placée dans une enceinte réactionnelle d'une installation de CVI afin de former une matrice majoritairement en céramique dans la porosité de la préforme fibreuse (étape 40). On peut utiliser une installation de CVI du type de celle décrite à la figure 2 du document WO 96/30317 en adaptant la nature des gaz précurseurs utilisés ainsi que le nombre de sources de tels gaz précurseurs. On peut réaliser par CVI de manière connue en soi une matrice en carbure de silicium ou séquencée comme évoqué plus haut. En variante, on peut réaliser la matrice par voie liquide (imprégnation par une résine précurseur de la matrice et transformation par réticulation et pyrolyse, le processus pouvant être répété) ou par infiltration de silicium à l'état fondu (procédé de «Melt-Infiltration»).

La figure 4 illustre le cas où la préforme fibreuse a d'abord été réalisée (étape 100) avant dépôt de la première couche d'interphase de B(AI)N. Comme évoqué plus haut, on peut déposer durant l'étape optionnelle 200 une couche d'interphase en BN. Le procédé comprend le dépôt d'une couche d'interphase B(Al)N par CVI en mettant en œuvre les mêmes conditions opératoires que celles exposées plus haut pour la CVD (étape 300). On réalise enfin une matrice majoritairement en céramique dans la porosité résiduelle de la préforme fibreuse de la manière décrite plus haut (étape 400).

La figure 5 représente un troisième exemple de pièce 3 selon l'invention. Dans cette configuration, la pièce 3 comprend une couche intercalaire 33 comprenant du silicium au contact de la première couche d'interphase 24. Comme évoqué plus haut, la présence d'une couche comprenant du silicium au contact de la couche d'interphase B(Al)N permet avantageusement de stabiliser davantage encore le verre B₂O₃ en formant un verre borosilicaté. La couche 33 peut, par exemple, être une couche d'un matériau céramique. La couche 33 peut, par exemple, être en carbure de silicium, en nitrure de silicium ou en Si-B-C. L'épaisseur e₄ de la couche 33 peut être inférieure ou égale à l'épaisseur e₃ et/ou à l'épaisseur e₂. L'épaisseur e₄ de la couche 33 peut par exemple être supérieure ou égale à 100 nm, par exemple comprise entre 100 nm et 500 nm.

La figure 6 est un ordinogramme montrant une succession d'étapes possibles pour réaliser la pièce 3 illustrée à la figure 5. Une préforme fibreuse est, tout d'abord, réalisée (étape 150) puis une couche d'interphase de BN est formée sur les fils par CVI (étape 250). On forme ensuite la couche intercalaire 33 comprenant du silicium sur la couche d'interphase de BN formée (étape 350). Cette couche intercalaire peut être formée par infiltration chimique en phase vapeur. La couche intercalaire pourrait, en variante, être formée par dépôt chimique en phase vapeur si celle-ci est formée sur les fils avant réalisation de la préforme fibreuse. La fabrication de la pièce est poursuivie par formation sur la couche intercalaire de la couche d'interphase de B(AI)N (étape 450) et ensuite par la formation d'une matrice majoritairement céramique dans la porosité résiduelle de la préforme (étape 550).

On a décrit le cas où une couche intercalaire 33 comprenant du silicium est présente entre la première couche d'interphase 24 et la deuxième couche d'interphase 23. On pourrait en variante avoir une configuration dépourvue de la deuxième couche d'interphase 23, du type de celle décrite à la figure 1, et qui présenterait une couche intercalaire comprenant du silicium au contact des fils 12 et de la première couche d'interphase 14. Aussi même en l'absence de la couche intercalaire comprenant du silicium, la stabilisation supplémentaire de B₂O₃ par apport de silicium peut être conférée par une portion de la matrice 16 comportant du silicium et en contact avec la première couche d'interphase.

Une fois fabriquée, la pièce 1, 2 ou 3 peut être utilisée à une température supérieure ou égale à 800°C dans une atmosphère oxydante et humide. On peut, en particulier, l'utiliser à une température comprise entre 800°C et 1400°C. La pièce 1, 2 ou 3 peut, en particulier, être utilisée sous air humide.

La pièce 1, 2 ou 3 ainsi fabriquée peut être une pièce pour application aéronautique ou aérospatiale. La pièce peut être une pièce de partie chaude d'une turbine à gaz d'un moteur aéronautique ou aérospatial ou d'une turbine industrielle. La pièce peut être une pièce de turbomachine. La pièce peut constituer une partie au moins d'un distributeur, une partie au moins d'une tuyère ou d'un revêtement de protection thermique, une paroi d'une chambre de combustion, un secteur d'anneau de turbine ou une aube de turbomachine.

L'expression « compris(e) entre ... et ... » doit se comprendre comme incluant les bornes.

## Revendications

1. Pièce en matériau composite (1 ; 2 ; 3) comprenant un renfort fibreux en fils (12) de carbone ou de céramique et une matrice majoritairement en céramique (16), la pièce comprenant en outre une première couche d'interphase (14 ; 24) recouvrant les fils et présente entre les fils et la matrice, ladite première couche d'interphase étant une couche de nitrure de bore dopé par de l'aluminium et présentant une teneur atomique en aluminium comprise entre 5% et 15%.

2. Pièce (1 ; 2 ; 3) selon la revendication 1, dans laquelle la première couche d'interphase présente une teneur atomique en aluminium comprise entre 5% et 12%.

3. Pièce (1 ; 2 ; 3) selon la revendication 2, dans laquelle la première couche d'interphase présente une teneur atomique en aluminium comprise entre 7% et 12%.

4. Pièce (1) selon l'une quelconque des revendications 1 à 3, dans laquelle la première couche d'interphase (14) est au contact des fils (12).

5. Pièce (2 ; 3) selon l'une quelconque des revendications 1 à 3, dans laquelle la pièce comprend en outre une deuxième couche d'interphase (23) en nitrure de bore située entre les fils (12) et la première couche d'interphase (24).

6. Pièce (2) selon la revendication 5, dans laquelle la première couche d'interphase (24) est au contact de la deuxième couche d'interphase (23).

7. Pièce selon l'une quelconque des revendications 1 à 6, dans laquelle la pièce comprend une couche (33) comprenant du silicium en contact avec la première couche d'interphase (24).

8. Pièce selon la revendication 7 rattachée à l'une quelconque des revendications 1 à 3, 5 ou 6, dans laquelle ladite couche (33) comprenant du silicium est présente entre les fils (12) et la première couche d'interphase (24).

9. Procédé de fabrication d'une pièce (1 ; 2 ; 3) selon l'une quelconque des revendications 1 à 8, le procédé comprenant au moins les étapes suivantes :
- formation de la première couche d'interphase (14 ; 24) sur les fils (12),
- réalisation d'une préforme fibreuse formant le renfort fibreux de la pièce à obtenir à partir des fils (12) par mise en œuvre d'une ou plusieurs opérations textiles, et
- formation d'une matrice (16) majoritairement en céramique dans la porosité de la préforme fibreuse sur la première couche d'interphase (14 ; 24).

10. Procédé selon la revendication 9, dans lequel la première couche d'interphase (14 ; 24) est formée sur les fils par infiltration ou dépôt chimique en phase vapeur.

11. Procédé selon la revendication 10, dans lequel la première couche d'interphase (14 ; 24) est formée à partir d'une phase gazeuse réactionnelle comprenant du trichlorure de bore BCl₃, de l'ammoniac NH₃ et un gaz précurseur comprenant de l'aluminium.

12. Procédé selon la revendication 11, dans lequel le gaz précurseur comprenant de l'aluminium est choisi parmi : le triméthylaluminium, le trichlorure d'aluminium, l'aluminium acétylacétonate, l'isopropoxyde d'aluminium, l'éthoxyde d'aluminium et leurs mélanges.

13. Procédé d'utilisation d'une pièce (1 ; 2 ; 3) selon l'une quelconque des revendications 1 à 8, le procédé comprenant une étape d'utilisation de ladite pièce à une température supérieure ou égale à 800°C en milieu oxydant et humide.

## Patentansprüche

1. Teil aus Verbundwerkstoff (1; 2; 3), umfassend eine Faserverstärkung aus Kohlenstoff- oder Keramikfäden (12) und eine überwiegend aus Keramik bestehende Matrix (16), wobei das Teil ferner eine erste Zwischenphasenschicht (14; 24) umfasst, welche die Fäden bedeckt und zwischen den Fäden und der Matrix vorhanden ist, wobei die erste Zwischenphasenschicht eine Bornitridschicht ist, welche mit Aluminium dotiert ist und einen Atomgehalt an Aluminium im Bereich zwischen 5 % und 15 % aufweist.

2. Teil (1; 2; 3) nach Anspruch 1, bei dem die erste Zwischenphasenschicht einen Atomgehalt an Aluminium im Bereich zwischen 5 % und 12 % aufweist.

3. Teil (1; 2; 3) nach Anspruch 2, bei dem die erste Zwischenphasenschicht einen Atomgehalt an Aluminium im Bereich zwischen 7 % und 12 % aufweist.

4. Teil (1) nach einem der Ansprüche 1 bis 3, bei dem die erste Zwischenphasenschicht (14) mit den Fäden (12) in Kontakt steht.

5. Teil (2; 3) nach einem der Ansprüche 1 bis 3, bei dem das Teil ferner eine zweite Zwischenphasenschicht (23) aus Bornitrid umfasst, die zwischen den Fäden (12) und der ersten Zwischenphasenschicht (24) gelegen ist.

6. Teil (2) nach Anspruch 5, bei dem die erste Zwischenphasenschicht (24) mit der zweiten Zwischenphasenschicht (23) in Kontakt steht.

7. Teil nach einem der Ansprüche 1 bis 6, bei dem das Teil eine Silizium umfassende Schicht (33) umfasst, die mit der ersten Zwischenphasenschicht (24) in Kontakt steht.

8. Teil nach Anspruch 7, in Verbindung mit einem der Ansprüche 1 bis 3, 5 oder 6, bei dem die Silizium umfassende Schicht (33) zwischen den Fäden (12) und der ersten Zwischenphasenschicht (24) vorhanden ist.

9. Verfahren zur Herstellung eines Teils (1; 2; 3) nach einem der Ansprüche 1 bis 8, wobei das Verfahren wenigstens die folgenden Schritte umfasst:
- Ausbilden der ersten Zwischenphasenschicht (14; 24) auf den Fäden (12),
- Herstellen eines Faservorformlings, der die Faserverstärkung des Teils bildet, das aus den Fäden (12) durch Durchführen eines oder mehrerer Textilarbeitsschritte zu erhalten ist, und
- Ausbilden einer überwiegend aus Keramik bestehenden Matrix (16) in der Porosität des Faservorformlings auf der ersten Zwischenphasenschicht (14; 24).

10. Verfahren nach Anspruch 9, bei dem die erste Zwischenphasenschicht (14; 24) durch chemische Gasphaseninfiltration oder -abscheidung auf den Fäden gebildet wird.

11. Verfahren nach Anspruch 10, bei dem die erste Zwischenphasenschicht (14; 24) aus einer Reaktionsgasphase gebildet wird, die Bortrichlorid BCl₃, Ammoniak NH₃ und ein Aluminium umfassendes Vorläufergas umfasst.

12. Verfahren nach Anspruch 11, bei dem das Aluminium umfassende Vorläufergas ausgewählt ist aus: Trimethylaluminium, Aluminiumtrichlorid, Aluminiumacetylacetonat, Aluminiumisopropoxid, Aluminiumethoxid und deren Mischungen.

13. Verfahren zur Verwendung eines Teils (1; 2; 3) nach einem der Ansprüche 1 bis 8, wobei das Verfahren einen Schritt zur Verwendung des Teils bei einer Temperatur von mehr als oder gleich 800 °C in oxidierendem und feuchtem Medium umfasst.

## Claims

1. A composite material part (1; 2; 3) comprising fiber reinforcement made of carbon or ceramic yarns (12) and a matrix (16) that is mostly ceramic, the part further comprising a first interphase layer (14; 24) covering the yarns and present between the yarns and the matrix, said first interphase layer being a layer of boron nitride doped with aluminum and presenting an atom content of aluminum lying in the range 5% to 15%.

2. A part (1; 2; 3) according to claim 1, wherein the first interphase layer presents an atom content of aluminum lying in the range 5% to 12%.

3. A part (1; 2; 3) according to claim 2, wherein the first interphase layer presents an atom content of aluminum lying in the range 7% to 12%.

4. A part (1) according to any one of claims 1 to 3, wherein the first interphase layer (14) is in contact with the yarns (12).

5. A part (2; 3) according to any one of claims 1 to 3, wherein the part further comprises a second interphase layer (23) of boron nitride situated between the yarns (12) and the first interphase layer (24).

6. A part (2) according to claim 5, wherein the first interphase layer (24) is in contact with the second interphase layer (23).

7. A part according to any one of claims 1 to 6, wherein the part includes a layer (33) comprising silicon in contact with the first interphase layer (24).

8. A part according to claim 7 as dependent on any one of claims 1 to 3, 5, or 6, wherein the layer (33) including silicon is present between the yarns (12) and the first interphase layer (24).

9. A method of fabricating a part (1; 2; 3) according to any one of claims 1 to 8, the method comprising at least the following steps:
- forming the first interphase layer (14; 24) on the yarns (12);
- making a fiber preform forming the fiber reinforcement of the part that is to be obtained out of the yarns (12) by performing one or more textile operations; and
- forming a matrix (16) mostly of ceramic in the pores of the fiber preform on the first interphase layer (14; 24).

10. A method according to claim 9, wherein the first interphase layer (14; 24) is formed on the yarns by chemical vapor infiltration or deposition.

11. A method according to claim 10, wherein the first interphase layer (14; 24) is made from a reaction gas phase comprising boron trichloride BCl₃, ammonia NH₃, and a precursor gas including aluminum.

12. A method according to claim 11, wherein the precursor gas including aluminum is selected from: trimethylaluminum, aluminum trichloride, aluminum acetylacetonate, aluminum isopropoxide, aluminum ethoxide, and mixtures thereof.

13. A method of using a part (1; 2; 3) according to any one of claims 1 to 8, the method comprising a step of using said part at a temperature higher than or equal to 800°C in a medium that is oxidizing and wet.
